Europäisches Patentamt

European Patent Office

Office européen des brevets

(11) Veröffentlichungsnummer: **0 515 990 A2**

# EUROPÄISCHE PATENTANMELDUNG

(21) Anmeldenummer: **92108640.1**

(22) Anmeldetag: **22.05.92**

(51) Int. Cl.5: **B29C 67/14**, B29C 43/22,
B32B 27/00

(30) Priorität: **27.05.91 DE 9106488 U**

(43) Veröffentlichungstag der Anmeldung:
**02.12.92 Patentblatt 92/49**

(84) Benannte Vertragsstaaten:
**AT BE CH DE DK ES FR GB IT LI LU NL SE**

(71) Anmelder: **HOECHST AKTIENGESELLSCHAFT
Postfach 80 03 20
W-6230 Frankfurt am Main 80(DE)**

(72) Erfinder: **Stadler, Rudolf Ernst
St. Lambertusstraat 50
NL-6023 BH Budel-Schoot(NL)**
Erfinder: **Eckstein, Joachim
Erbsenacker 6
W-6200 Wiesbaden(DE)**
Erfinder: **König, Robert
Robert-Koch-Strasse 9
W-6239 Eppstein-Bremthal(DE)**

(54) **Verpresster Formkörper aus Inertteilchen und hitzehärtbarem Harz.**

(57) Es wird ein Formkörper beschrieben mit einem Kern enthaltend Inertteilchen, der 0 bis 50 Gew.-% hitzegehärtetes Harz und wenigstens 10 Gew.-% thermoplastischen Kunststoff enthält, bezogen jeweils auf das Gesamtgewicht des Formkörpers.

EP 0 515 990 A2

Die vorliegende Erfindung betrifft einen verpreßten Formkörper mit einem Kern enthaltend Inertteilchen.

Formkörper mit einem Kern aus Inertteilchen, die von hitzegehärtetem Harz umgeben sind, werden z.B. in der EP-A-0 081 147 beschrieben. In der Schrift werden dekorative Bauplatten erwähnt, zu deren Herstellung Holzfasern mit wäßrig-alkalischer Lösung hitzehärtbarer Phenolharze beschichtet oder imprägniert werden. Die Mischung wird dann in der Hitze verpreßt, wobei das Harz aushärtet.

Ein Problem, das bei Formkörpern der bekannten Art immer wieder auftritt, ist darin zu sehen, daß es nicht möglich ist, die Formkörper, aufgrund ihrer mechanischen Eigenschaften (Härte), zu vernageln, das heißt mit Hilfe von Nägeln auf einem Hintergrund zu befestigen. Die Bearbeitung mit Nägeln wäre aber wünschenswert, weil sich die Formkörper in Form von Platten, ihrer günstigen Oberflächeneigenschaften wegen, besonders gut eignen würden als mehrfach verwendbare Betonverschalung.

Aufgabe der vorliegenden Erfindung war es daher, Formkörper aus verpreßtem Material zu schaffen, die inhärent eine verbesserte Elastizität besitzen, und die aufgrund dieser Eigenschaft mit Hilfe von Nägeln aneinander oder an einem anderen Untergrund befestigt werden können.

Gelöst wird diese Aufgabe erfindungsgemäß durch einen Formkörper der eingangs genannten Gattung, dessen Kennzeichenmerkmale darin bestehen, daß er eine Menge von 0 bis 50 Gew.-% an hitzegehärtetem Harz enthält und daß er wenigstens 10 Gew.-% thermoplastischen Kunststoff enthält, bezogen jeweils auf das Gesamtgewicht des Formkörpers.

Unter dem Begriff Formkörper werden erfindungsgemäß insbesondere Platten, Profile, Fliesen und ähnliches verstanden, die unter anderem in der Bauindustrie in großem Umfang Anwendung finden.

Als Inertteilchen werden erfindungsgemäß organische oder anorganische Teilchen eingesetzt, vorzugsweise organische Fasermaterialien, besonders bevorzugt Holzfaserabfälle, die bei der Holz- und Papierverarbeitung in großen Mengen anfallen. Die Inertteilchen können aber auch Metalle wie Aluminium, Eisen, Zink, Magnesium oder Chrom oder auch anorganische Salze oder Oxide wie $CaCO_3$, $BaSO_4$, $TiO_2$ oder $SiO_2$ oder beliebige Mischungen dieser genannten Stoffe sein. Dies insbesondere, wenn als thermoplastischer Kunststoff Abfallmaterialien wie Blisterpackungen oder Umverpackungen eingesetzt werden. In diesem Fall kann man auch auf ein hitzehärtbares Harz verzichten (hitzegehärtetes Harz im Formkörper = 0 Gew.-%). Der Gehalt an Inertteilchen in den fertigen Formkörpern beträgt erfindungsgemäß bevorzugt 10 bis 75 Gew.-%, besonders bevorzugt 20 bis 50 Gew.-%, bezogen jeweils auf das Gesamtgewicht der Formkörper.

Die hitzegehärteten, beziehungsweise hitzehärtbaren Harze, die im Rahmen der Erfindung für die Formkörper eingesetzt werden, können allgemein vernetzbare Phenol-Formaldehyd-Harze sein, es können aber auch die in der EP-A-402 785 beschriebenen Harze auf Basis von Bisphenol vorteilhaft für die Herstellung der Formkörper eingesetzt werden. Der Harzgehalt der erfindungsgemäßen Formkörper liegt vorzugsweise im Bereich von 0,5 bis 40 Gew-%, bezogen auf das Gesamtgewicht der Formkörper.

Als thermoplastische Kunststoffe eignen sich im Zusammenhang mit der vorliegenden Erfindung Materialien wie Polyvinylchlorid, Polyolefine wie Polyethylen oder Polypropylen, Polyester wie Polyethylenterephthalat, Polyamide wie Poly-epsilon-caprolactam oder Polyhexamethylenadipamid und ähnliche, Polycarbonate, Polystyrole oder Polyphenylensulfide oder Mischungen von diesen.

Thermoplastische Kunststoffe der genannten Art werden in der Technik und vor allem auf dem Verpackungssektor in außerordentlich großem Umfang zu den verschiedensten Zwecken eingesetzt, weil sie günstige mechanische und physikalische Eigenschaften besitzen, weil sie sich besonders leicht durch automatische Verarbeitungsmaschinen verformen lassen und vor allen weil ihnen durch Einfärbung, Bedruckung und/oder Metallisierung leicht ein optisches Erscheinungsbild verliehen werden kann, das das ästhetische Empfinden der Menschen in besonders angenehmer Weise anspricht und nach dem Willen der Hersteller und Anbieter bei den Endverbrauchern den Eindruck hochwertiger Qualität entstehen läßt. Bedingt durch die außerordentlich umfangreiche Anwendung derartiger thermoplastischer Kunststoffe wachsen bei den Herstellern, den Weiterverarbeitern und den Endverbrauchern größere Mengen an Verschnittmaterial oder Reststoffen an, die nicht in vollem Umfang in den Produktions- oder Weiterverarbeitungsprozess zurückgeführt werden können. Derartige Verschnittmaterialien oder Reststoffe, die umgangssprachlich auch als Recyclingmaterial bezeichnet werden, eignen sich vorzugsweise besonders gut zur Herstellung der erfindungsgemäßen Formkörper, wenn sie vorher einem Verdichtungs- oder Granulierungsprozess unterworfen werden. Erfindungsgemäß können diese Materialien auch als Kunststoffabfall eingesetzt werden, sogar ohne vorherige Abtrennung von Verunreinigungen wie Metallen.

Die erfindungsgemäßen Formkörper können vorzugsweise mehr als 25 Gew.-%, besonders bevorzugt im Bereich von 40 bis 75 Gew.-%, aber auch bis zu 99.5 Gew.-% bezogen auf das Gesamtgewicht der Formkörper, an thermoplastischem Kunststoffmaterial enthalten.

Zur Oberflächenveredelung der erfindungsgemäßen Formkörper können zusätzlich auf den Oberflächen der Formkörper Deckfolien aus thermoplastischem Kunststoff, vorzugsweise aus Polyvinylchlorid angeordnet sein. Die Dicke derartiger Deckfolien, die gegebenenfalls eine durch Strecken hervorgerufene molekulare Orientierung besitzen, liegt erfindungsgemäß im Bereich von 30 bis 1200 μm, die Deckfolien können zusätzlich eingefärbt, bedruckt und/oder metallisiert sein.

Durch den Einsatz strukturierter Pressplatten können die erfindungsgemäßen Formkörper zusätzlich mit einer Oberflächenstrukturierung versehen sein, umgekehrt können durch hochglanzpolierte Pressplatten Formkörper hergestellt werden, die selbst eine besonders hochglänzende Oberfläche besitzen.

Die erfindungsgemäßen Formkörper können hergestellt werden, indem das Gemisch aus gegebenenfalls vorhandenem Inertmaterial, thermoplastischem Kunststoffmaterial und gegebenenfalls vorhandenem hitzehärtbarem Harz unter einem Druck im Bereich von 5 bis 20 bar, falls z.B. Polyvinylchlorid anwesend ist, insbesondere bei einer Temperatur im Bereich von 140 bis 170 °C und allgemein über eine Zeitspanne von bis zu 45 min. verpresst werden. Unter den genannten Bedingungen wird eine Volumenverdichtung von 1 : 5 bis 1 : 15 beobachtet, entsprechend einer Volumenverringerung von 500 bis 1500 %. Sofern allein kontaminierte Kunststoffabfälle eingesetzt werden, können diese auch in einem Kalander verarbeitet werden, wobei gegebenenfalls die entstehenden, mehr oder weniger dicken Folien übereinandergelegt und zu dickeren Platten verpreßt werden können. Die erfindungsgemäßen Formkörper können eine Gesamtdicke im Bereich von 3 bis 30 mm, vorzugsweise von 5 bis 25 mm aufweisen.

Überraschend wurde gefunden, daß Formkörper der vorstehend in allen Einzelheiten beschriebenen Art sich durch verbesserte, inhärente Elastizität auszeichnen und daß es leicht möglich ist, die Formkörper mit Nägeln zu bearbeiten, ohne daß dabei eine Rißbildung zu beobachten ist.

Die Erfindung soll nachfolgend beispielhaft anhand einer Zeichnung näher erläutert werden.

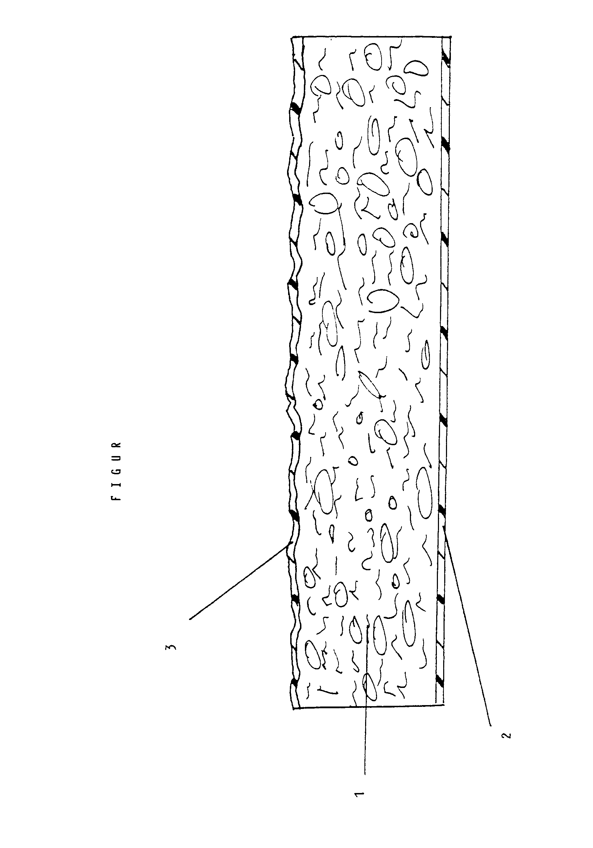

Die Figur zeigt einen senkrechten Schnitt durch einen erfindungsgemäßen Formkörper in seitlicher Ansicht.

Durch Bezugzeichen ist der Kern 1 hervorgehoben, der Inertteilchen, hier faserartiges Material, thermoplastischen Kunststoff und Harz enthält. Der Kern 1 trägt auf seiner Unterseite eine Deckfolie 2 mit glatter Oberfläche und auf seiner Oberseite eine Deckfolie 3, die eine unregelmäßige Oberflächenstrukturierung besitzt.

## Patentansprüche

1. Formkörper mit einem Kern enthaltend Inertteilchen, dadurch gekennzeichnet, daß er 0 bis 50 Gew.-% hitzegehärtetes Harz enthält und daß er wenigstens 10 Gew.-% thermoplastischen Kunststoff enthält, bezogen jeweils auf das Gesamtgewicht des Formkörpers.

2. Formkörper nach Anspruch 1, dadurch gekennzeichnet, daß er die Gestalt von Platten, Profilen oder Fliesen besitzt.

3. Formkörper nach Anspruch 1 oder 2, dadurch gekennzeichnet, daß er als Inertteilchen organische oder anorganische Teilchen enthält.

4. Formkörper nach einem oder mehreren der Ansprüche 1 bis 3, dadurch gekennzeichnet, daß die Inertteilchen organische Fasermaterialien sind.

5. Formkörper nach Anspruch 4, dadurch gekennzeichnet, daß die organischen Fasermaterialien Holzfaserabfälle sind.

6. Formkörper nach einem oder mehreren der Ansprüche 1 bis 3, dadurch gekennzeichnet, daß die Inertteilchen Metalle, Salze oder Oxide sind.

7. Formkörper nach einem oder mehreren der Ansprüche 1 bis 6, dadurch gekennzeichnet, daß er kein hitzegehärtetes Harz enthält.

8. Formkörper nach einem oder mehreren der Ansprüche 1 bis 7, dadurch gekennzeichnet, daß er als hitzegehärtete Harze, vernetzte Phenol-Formaldehyd-Harze oder Harze auf Basis von Bisphenol in einer Menge im Bereich von 0,5 bis 40 Gew-%, bezogen auf das Gesamtgewicht der Formkörper, enthält.

9. Formkörper nach einem oder mehreren der Ansprüche 1 bis 8, dadurch gekennzeichnet, daß er als thermoplastische Kunststoffe Polyvinylchlorid, Polyolefine wie Polyethylen oder Polypropylen, Polyester wie Polyethylenterephthalat, Polyamide wie Poly-epsilon-caprolactam oder Polyhexamethylenadipamid, Polycarbonate, Polystyrole, Polyphenylensulfide oder Mischungen von diesen enthält.

10. Formkörper nach Anspruch 9, dadurch gekennzeichnet, daß er die thermoplastischen Kunststoffe als Recyclingmaterial enthält.

11. Formkörper nach einem oder mehrenen der Ansprüche 1 bis 10, dadurch gekennzeichnet, daß er thermoplastische Kunststoffe in einer Menge im Bereich von 40 bis 75 Gew.-%, bezogen auf das Gesamtgewicht des Formkörpers, enthält.

12. Formkörper nach einem oder mehreren der Ansprüche 1 bis 11, dadurch gekennzeichnet, daß auf wenigstens einer seiner Oberflächen eine Deckfolie aus thermoplastischem Kunststoff angeordnet ist, die eine Dicke im Bereich von 30 bis 1200 μm besitzt und die gegebenenfalls eingefärbt, bedruckt und/oder metallisiert ist.

13. Formkörper nach einem oder mehreren der Ansprüche 1 bis 12, dadurch gekennzeichnet, daß er mit einer Oberflächenstrukturierung versehen ist.

14. Formkörper nach einem oder mehreren der Ansprüche 1 bis 13, dadurch gekennzeichnet, daß er eine Gesamtdicke im Bereich von 3 bis 30 mm aufweist.

FIGUR